# NEUE EUROPÄISCHE PATENTSCHRIFT

(11) **EP 0 651 170 B2**
(45) Veröffentlichungstag und Bekanntmachung des Hinweises auf die Entscheidung über den Einspruch: **02.04.2003**
(45) Hinweis auf die Patenterteilung: 16.06.1999
(21) Anmeldenummer: 94116588.8
(22) Anmeldetag: 21.10.1994
(51) Int. Cl.: F16D 3/38

(54) **Gelenkhälfte für Kreuzgelenke**
Coupling part for a universal joint
Moitié d'accouplement pour joint universel

(30) Priorität: 22.10.1993 DE 9316024 U
(43) Veröffentlichungstag der Anmeldung: 03.05.1995
(73) Patentinhaber: Ehrenberg, Kurt, Ing., CH-6914 Carona (CH)
(72) Erfinder: Ehrenberg, Kurt, Ing., CH-6914 Carona (CH)
(74) Vertreter: Riebling, Peter, Dr.-Ing.

(56) Entgegenhaltungen:
- EP-A- 0 417 536
- EP-B- 0 320 229
- DE-C- 2 900 846
- DE-U- 9 316 024
- US-A- 3 901 048
- PATENT ABSTRACTS OF JAPAN vol. 16, no. 195 (M-1246) 12. Mai 1992 & JP-A-04 029 620 (NIPPON) 31. Januar 1992
- Technisches Handbuch "Gelenkwellen und Überlastungskupplungen für Landmaschinen und Sonderantriebe" der Firma Walterscheid, Ausgabe LGW D/GB/F 584 G3-1, Mai 1984
- Konstruktionszeichnung "Nabengabel 2200" Walterscheid Zeichnungs-Nr.: 203005, Sach-Nr.:041156, Datum 15.04.1983

## Beschreibung

Die Neuerung bezieht sich auf eine Gelenkhälfte für Kreuzgelenke oder dergleichen, bestehend aus einem einstückigen, aus Blech vorgefertigtem im wesentlichen U-förmigen Mitnehmer, der zwei Gabelenden mit je einer Aufnahmeöffnung für ein Drehzapfenlager sowie einen Gabelboden aufweist, an den ein Anschlußstück zum Ein- und Abführen der Drehmomente anschließbar ist.

Jeweils zwei solcher Gelenkhälften werden in an sich bekannter Weise über ein Zapfenkreuz gelenkig miteinander verbunden.

Es sind verschiedene Gestaltungsformen dieser Gelenkhälften bekannt. Bisher konnte allerdings keine Gestaltung das grundlegende Problem, nämlich die geforderte Erhöhung der Belastbarkeit des Kreuzgelenkes bei gleichzeitiger Beibehaltung des maximalen Knickwinkels und der einfachen Montage lösen. Sobald die Aufnahmebohrungen für die Nadellager in den Gelenkarmen nach innen verlängert werden, ergeben sich Schwierigkeiten bei der Montage des Kreuzgelenkes.

Die Anforderungen an komplette Kreuzgelenke werden immer höher. Dabei soll der Rotationsdurchmesser wegen des Platzbedarfs keinesfalls zunehmen. Gleichzeitig sollen höhere maximale Drehmomente und größere Knickwinkel erreicht werden.

Aus der DE-C-2 900 846 ist es bekannt, Versteifungssicken an den Gabelarmen vorzusehen, um so die Torsionssteifigkeit der Gelenkhältten zu erhöhen. Darüberhinaus sind an den Augenbohrungen Verbreiterungsringe vorgesehen, um die Abstützflächen für die einzupressenden Nadellager zu vergrößern.

Hier stellt sich ebenfalls das Problem der Montage des Rotationsdurchmessers und des daraus resultierenden zulässigen Knickwickels.

Die JP-A-4 029 620 schildert eine Gelenkhälfte für Kreuzgelenke, bei der in Axialrichtung der Gelenkhälfte Vorsprünge an der Aussenseite jedes Gabelarmes gebildet werden. Diese Vorsprünge erstrecken sich über die Augenbohrung zur Aufnahme des Zapfenkreuzes hinweg. Zweck dieser Vorsprünge ist es, die Torsionssteifigkeit durch eine bestimmte Formgebung des Querschnitts der Gabelarme zu erhöhen. Eine Möglichkeit, die Absttitzffächen für die einzupressenden Nagellager zu vergrößern, ist nicht angesprochen.

Es ist technisch nicht möglich, einfach dickeres Material einzusetzen, um die Anlageflächen für die Nadellager zu vergrößern. Einerseits ist es dann fertigungstechnisch nicht mehr möglich, die Gelenkgapel auf kleinstem Raum zu erstellen, da dickere Materialien größere Biegeradien erfordern. Andererseits steigen die Materialkosten um bis zu 40% bei der Verwendung von Material mit 8 mm Dicke gegenüber den bisher üblichen 4 - 5,5 mm Dicke. Darüberhinaus wird das gesamte Kreuzgelenk entsprechend schwerer. Die gewünschten technischen Forderungen (Knickwinkel) werden nicht erreicht.

Der Neuerung liegt deshalb die Aufgabe zugrunde, eine Gelenkhälfte zu schaffen, die höhere Belastungen und größere zulässige Knickwinkel ermöglicht, ohne daß die Montage dadurch erschwert wird.

Neuerungsgemäß wird diese Aufgabe durch die technische Lehre des Anspruchs 1 gelöst.

Insbesondere wird der Bereich der Gabelarme, der die Gabelbohrungen trägt, in bekannter Weise mit Verbreiterungsringen versehen. Normalerweise ergeben sich hier größere Konstruktionsprobleme, da sich die Zapfenkreuze nicht mehr in den Zwischenraum zwischen den Gabelarmen einführen lassen. Dies wird bei der vorliegenden Neuerung dadurch vermieden, daß in den Gabelarmen Aussparungen vorgesehen sind. Diese Aussparungen befinden sich nur an der Innenseite der Gabelarme.

Dadurch wird der zum Einführen der Zapfenkreuze nötige Zwischenraum erreicht. An allen anderen Stellen wird dagegen die tragende Länge der Außenbohrungen und damit die tragende Länge der Nadellager sowie das maximal übertragbare Drehmoment der Lagerung in Dreh-Belastungsrichtung gegenüber den bisherigen Konstruktionen deutlich erhöht.

Es ist nun nötig, auch die Belastbarkeit der Gabelarme mittels einer speziellen Formgebung zu erhöhen. Dies wird durch Verstärkungssicken erreicht, die sich an der Innen- oder Außenseite der Gabelarme befinden und sich von den Augenbohrungen bis zum Boden der Gelenkhälfte hin erstrecken.

Durch diese Sicken wird der Einbau nicht behindert, da sie in Einbaurichtung unterhalb der Augenbohrungen liegen. Da diese Sicken vorwiegend im Mittelbereich der Gabelarme angeordnet sind, wird auch der Knickwinkel keineswegs beeinträchtigt. Die Sicken sind durchgehend, so daß eine Versteifung bei jedem Knickwinkel erreicht wird.

Der Boden der Gelenkhälfte kann entweder eben oder rund bis kugelförmig ausgebildet sein. Am Boden ist ein Anschluß zum Ein- und Abführen der Drehmomente vorgesehen, der z.B. als Flansch, als Profil oder Verzahnung, oder anders ausgeführt werden kann.

Darüber hinaus ist es vorgesehen, die Außenseiten der Gabelarme im Bereich zwischen den Augenbohrungen und dem Boden leicht nach außen zu biegen. Durch diese Biegung wird eine weitere Steifigkeit gegen Torsion der einzelnen Gabelarme und damit ein größeres maximal zulässiges Drehmoment erreicht. Außerdem kann ein größerer Knickwinkel erreicht werden.

Der Erfindungsgegenstand der vorliegenden Neuerung ergibt sich nicht nur aus dem Gegenstand der einzelnen Schutzansprüche, sondern auch aus der Kombination der einzelnen Schutzansprüche untereinander.

Es zeigen:
- Figur 1:: einen Gabelarm mit einer Aussensicke gemäß der vorliegenden Neuerung in der geschnittenen Seitenansicht;
- Figur 2:: den Gabelarm aus Figur 1 in der Draufsicht;
- Fig. 3a:: Halbschnitt durch Gabelarm mit Innensicke;
- Fig. 3b:: Halbschnitt durch Gabelarm mit Aussensicke;

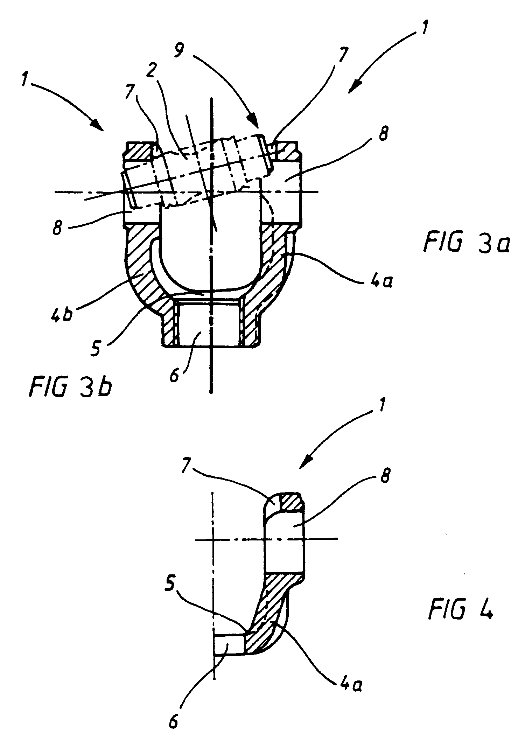

- Fig. 3a u. 3b:: die Montage des Zapfenkreuzes in den neuerungsgemässen Gabelarm;
- Figur 4:: weitere Darstellung eines neuerungsgemäßen Gabelarmes; Ausbildung des Gabelarmes ähnlich der DE 29 00 846 C2;

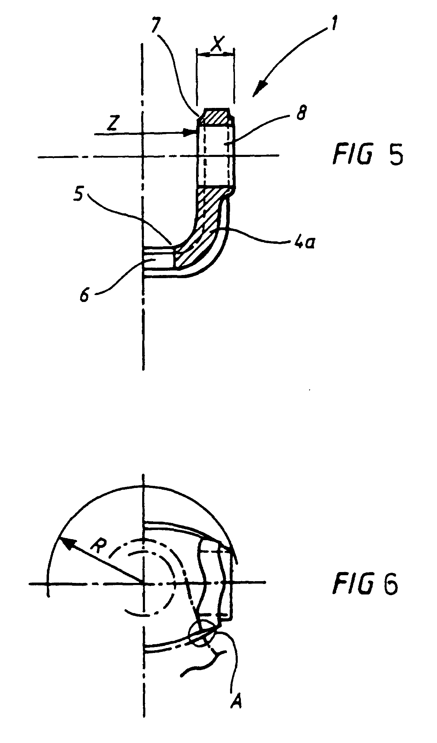

- Figur 5:: einen Gabelarm mit Innensicke im Schnitt
- Figur 6:: Ansicht eines abgewinkelten Kreuzgelenks nach der Erfindung.

Gelenkhälften für Kreuzgelenke weisen im allgemeinen den Nachteil auf, daß die Größe der Anlagefläche des Nagellagers im Gabelarm sehr gering ist.

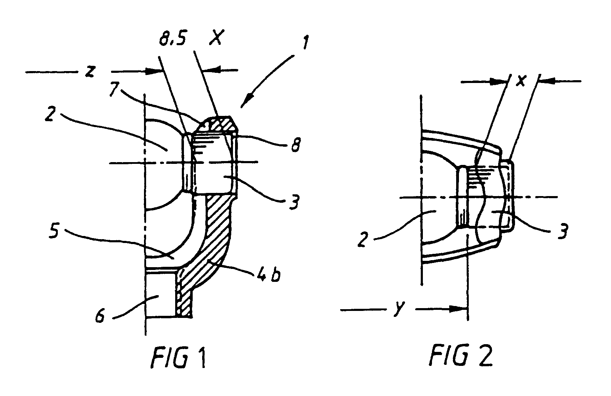

Figur 1 zeigt den neuerungsgemäßen Gabelarm 1 mit Aussensicke 4b, Boden 5 und Anschlußmöglichkeit 6. In diesen Gabelarm 1 eingebaut ist das Zapfenkreuz 2 mit dem eingepreßten Nadellager 3. Dabei sind die Nadellager 3 in die Augenbohrung 8 eingepreßt und axialsichernd verstemmt.

Die Verringerung des inneren Abstands Z der Anlageflächen bei gleichzeitiger Vergrößerung der Breite X der Anlageflächen wird durch eine Aussparung 7 erreicht. Diese Aussparung 7 ist an der Innenseite der Gabelarme 1 vorgesehen.

In der Abbildung wird eine Aussensicke 4b dargestellt. In diesem Fall ist es vorgesehen, die Aussparung 7 nicht nur an der Montageseite der Gabelarme 1 anzubringen, sondern sie über die Augenbohrung 8 weg fortzusetzen. Die Aussparung 7 mündet also unterhalb der Augenbohrungen 8 in den wegen der Aussensicke 4b entstehenden Freiraum in der Mitte des Gabelarms 1.

Es ist ebenfalls dargestellt, daß die Aussensikke 4b durchgehend von der Augenbohrung 8 in den Boden 5 einmündet. Im Boden 5 ist ein Anschluß 6 vorgesehen, der in dieser Ausführungsform mit einem Profil oder einer Verzahnung versehen sein kann.

Die Figur 2 zeigt eine Draufsicht auf die Ansicht von Figur 1. Es ist deutlich zu erkennen, daß die Außenseiten des Gabelarmes 1 zwischen Boden 5 und Augenbohrung 8 nach außen aufgebogen sind. Durch diese Verbiegung wird eine erhöhte Torsionssteifigkeit des Gabelarmes erreicht. Diese Erhöhung ist nötig, da sich aufgrund der Neugestaltung der Augenbohrungen größere Drehmomente und Leistungen übertragen lassen.
Gleichzeitig wird der maximal zulässige Knickwinkel erhöht.

In Figur 2 ist noch zu beachten, daß das Maß Y, die Breite des Kreuzgelenkes, weltweit festgelegt ist. Dieses Maß ist daher Grundlage der gesamten Konstruktion. Figur 3 zeigt die Montage des Zapfenkreuzes 2 in die Gelenkhälfte. Zunächst wird ein Lagerzapfen des Kreuzgelenkes 2 in eine Augenbohrung 8 eingesetzt. Das Zapfenkreuz 2 wird dann in dieser Augenbohrung 8 soweit als möglich nach außen verschoben. Danach erfolgt ein Einschwenken des Zapfenkreuzes 2 in Pfeilrichtung 9 in die gegenüberliegende Augenbohrung 8. Dieses Einschwenken wird durch die Aussparung 7 ermöglicht, die am oberen Ende der Gabelarme 1 angebracht ist.

Durch die Aussparung 7 wird der Einbauabstand der Gabelarme vergrößert. Der Restumfang der Augenbohrungen weist weiterhin eine größere Anlagefläche als die bisherigen Konstruktionen auf.

In Figur 3 ist in der rechten Bildhälfte ein Gabelarm 1 mit nach innen gerichteten Versteifungssicke 4a (Innensicke) und in der linken Bildhälfte ein Gabelarm mit nach außen gerichteten Versteifungssicke 4b (Außensicke) dargestellt. Eine derartige Konstruktion ist nicht vorgesehen. Diese Darstellungsart der beiden verschiedenen Sicken wurde gewählt, um in einer Zeichnung einen Vergleich der beiden Ausführungsformen zu ermöglichen.
Beide Sicken 4a, 4b verlaufen durchgehend von der Augenbohrung 8 bis in den Boden 5, an dem ein Anschluß 6 vorgesehen ist. Dabei ist zu beachten, daß bei der Verwendung einer Aussensicke 4b sich die Aussparung 7 über die Augenbohrung 8 hinweg fortsetzt und in den wegen der Aussensicke 4b entstehenden Freiraum in der Mitte des Gabelarms 1 einmündet. Die Steifigkeit des Gabelarms 1 sowie die Tragfähigkeit der Anlageflächen wird dadurch nicht beeinträchtigt.

Bei der Innensicke ist es demgegenüber nicht vorgesehen, die Aussparung 7 über die Augenbohrung 8 hinweg zu verlängern.

Eine Einzeldarstellung eines neuerungsgemässen Gabelarms 1 mit Aussparung 7, kombiniert mit Verbreiterungsringen an den Augenbohrungen 8 und Innensicke 4a, ist in Figur 4 gegeben. Hier ist deutlich zu erkennen, daß die Aussparung 7 sich auf den montageseitigen Teil des Gabelarms 1 beschränkt. Sie setzt sich insbesondere nicht in den Bereich zwischen Augenbohrung 8 und Boden 5 fort. (Gemäss DE 29 00 846 C2).

Im Vergleich dazu zeigt Figur 5 einen Gabelarm mit Innensicke. Hier ist ebenfalls eine Aussparung 7, die die Montage des Zapfenkreuzes 2 erleichtert, vorgesehen.

In Figur 6 wird ein neuerungsgemässes Kreuzgelenk in geknicktem Zustand dargestellt. Im Punkt A berühren sich die beiden Gelenkhälften und begrenzen so den Knickwinkel. Durch das bereits geschilderte Aufbiegen der Aussenseiten der Gabelarme im Bereich zwischen Boden 5 und Augenbohrung 8 wird erreicht, daß diese Berührung erst bei einem größeren Knickwinkel als bei nicht aufgebogenen Aussenseiten stattfindet.

Dabei wird der größte Aussendurchmesser R des Kreuzgelenks nicht erhöht, da die an den Augenbohrungen 8 angebrachten Verbreiterungsringe radial weiter von der Mittelachse des Kreuzgelenks abstehen als die aufgebogenen Außenseiten.

Wie bereits erwähnt, wird durch dieses Aufbiegen der Aussenseiten im Bereich zwischen Boden 5 und Augenbohrung 8 die Torsionssteifigkeit der Gabelarme 1 erhöht.

Mit dieser erfindungsgemässen Lehre werden eine höhere Belastbarkeit und ein größerer Knickwinkel bei gleichem Gewicht und gleich einfacher Montage für ein Kreuzgelenk erreicht.

### ZEICHNUNGS-LEGENDE

- 1: Gabelarm
- 2: Zapfenkreuz
- 3: Nadellager
- 4a: Innensicke 4b Außensicke
- 5: Boden
- 6: Anschluß
- 7: Aussparung
- 8: Augenbohrung
- 9: Pfeilrichtung
- X: Breite der Anlageflächen
- Y: Breite des Zapfenkreuzes bis zum Lagerbeginn
- Z: innerer Abstand der Anlageflächen
- A: Berührpunkt der Gelenkhälften beim Knicken
- R: Rotationsaussendurchmesser

## Patentansprüche

1. Gelenkhälfte für Kreuzgelenke, bestehend aus einem einstückigen, aus Blech vorgefertigten, im Wesentlichen U-förmigen Mitnehmer, der zwei Gabelarme (1) mit je einer Augenbohrung (8) für ein Drehzapfenlager (3) sowie einen geraden oder kugelförmigen Gabelboden aufweist, an dem ein Anschluss zum Ein- und Abführen der Drehmomente anschließbar ist, im Übergangsbereich zwischen Augenbohrung (8) und Boden (5) an den Gabelarmen (1) nach der Innen- oder Außenseite gerichtete Versteifungssicken (4a,4b) vorgesehen sind an, die durchgehend von der Augenbohrung (8) bis in den Boden (5) verlaufen, an den Augenbohrungen (8) Verbreiterungsringe angebracht sind und eine Aussparung (7) an der Innenseite am oberen Ende jedes Gabelarmes (1) vorgesehen ist, wobei durch die Aussparungen (7) der Einbauabstand für ein einzusetzendes Zapfenkreuz (2) vergrößert wird, wobei im Zwischenraum zwischen Augenbohrungen (8) und Boden (5) die Außenseiten der Gabelarme (1) nach außen gebogen sind

2. Gelenkhälfte nach Anspruch 1, **dadurch gekennzeichnet, dass** die Augenbohrungen (8) für enge Maßtoleranzen beim Festigpressen kalibriert sind.

3. Gelenkhälfte nach den Ansprüchen 1 - 2, **dadurch gekennzeichnet, dass** die Aussparung (7) bei Verwendung einer Innensicke (4a) nur oberhalb der Augenbohrung (8) vorgesehen ist.

4. Gelenkhälfte nach einem der Ansprüche 1 - 2, **dadurch gekennzeichnet, dass** sich die Aussparung (7) bei Verwendung einer Aussensicke über die Augenbohrung (8) hinweg in Richtung Boden (5) fortsetzt.

5. Gelenkhälfte nach den Ansprüchen 1 - 4, **dadurch gekennzeichnet, dass** der Anschluss (6) am Boden (5) als Anschlussmuffe ausgeführt ist.

6. Gelenkhälfte nach den Ansprüchen 1 - 5, **dadurch gekennzeichnet, dass** der Anschluss (6) am Boden (5) über ein Profil oder eine Verzahnung erfolgt.

## Claims

1. Joint half for universal joints, consisting of an integral, substantially U-shaped carrier prefabricated from sheet metal, the carrier comprising two fork arms (1) each with an eye bore (8) for a pivot bearing (3) and a straight or spherical fork base to which a connection for the introduction and elimination of the torques can be connected, in the transition region between the eye bore (8) and base (5) reinforcement corrugations (4a, 4b) which are directed toward the inner or outer side and extend continuously from the eye bore (8) into the base (5) are provided on the fork arms (1), expansion rings are attached to the eye bores (8) and a recess (7) is provided on the inner side at the upper end of each fork arm (1), wherein the installation space for a cross link (2) to be inserted is enlarged by the recesses (7). the outer sides of the fork arms (1) being bent outwards in the gap between the eye bores (8) and base (5).

2. Joint half according to claim 1, **characterised in that** the eye bores (8) are calibrated for close dimensional tolerances on finish-pressing.

3. Joint half according to claims 1 to 2, **characterised in that** the recess (7) is only provided above the eye bore (8) when an inner corrugation (4a) is used.

4. Joint half according to either of claims 1 to 2, **characterised in that** the recess (7) continues beyond the eye bore (8) in the direction of the base (5) when an outer corrugation is used.

5. Joint half according to claims 1 to 4, **characterised in that** the connection (6) to the base (5) is designed as a connection sleeve.

6. Joint half according to claims 1 to 5, **characterised in that** the connection (6) to the base (5) takes place by means of a section or a toothing.

## Revendications

1. Moitié d'articulation pour des joints universels, formée d'un organe d'entraînement d'une seule pièce globalement en U qui est préfabriqué en tôle et qui comporte deux bras de fourche (1) pourvus chacun d'un oeillet (8) pour un palier de pivot (3), et un fond de fourche rectiligne ou sphérique auquel peut être relié un raccordement pour l'entrée et la sortie des couples, étant précisé que des nervures de renforcement (4a, 4b) sont prévues dans la zone de transition entre l'oeillet (8) et le fond (5) et sont dirigées vers le côté intérieur ou extérieur des bras de fourche (1), lesquelles nervures (4a, 4b) sont continues de l'oeillet (8) jusqu'au fond (5), que des bagues d'élargissement sont disposées sur les oeillets (8) et qu'un évidement (7) est prévu sur le côté intérieur, à l'extrémité supérieure de chaque bras de fourche (1), l'écartement de montage pour un croisillon (2) à introduire étant augmenté grâce aux évidements (7) et les côtés extérieurs des bras de fourche (1) étant courbés vers l'extérieur dans l'intervalle entre les oeillets (8) et le fond (5).

2. Moitié d'articulation selon la revendication 1, **caractérisée en ce que** les oeillets (8) sont calibrés pour des tolérances dimensionnelles étroites, lors du finissage par compression.

3. Moitié d'articulation selon les revendications 1 à 2, **caractérisée en ce que** lorsqu'on utilise une nervure intérieure (4a), l'évidement (7) n'est prévu qu'au-dessus de l'oeillet (8).

4. Moitié d'articulation selon l'une des revendications 1 à 2, **caractérisée en ce que** lorsqu'on utilise une nervure extérieure, l'évidement (7) se prolonge au-delà de l'oeillet (8), en direction du fond (5).

5. Moitié d'articulation selon les revendications 1 à 4, **caractérisée en ce que** le raccordement (6) au fond (5) est conçu comme un manchon de raccordement.

6. Moitié d'articulation selon les revendications 1 à 5, **caractérisée en ce que** le raccordement (6) au fond (5) se fait grâce à un profilé ou à une denture.
